# EUROPEAN PATENT APPLICATION

(11) **EP 4 482 125 A1**
(43) Date of publication of application: **25.12.2024**
(21) Application number: 23773750.7
(22) Date of filing: 17.03.2023
(51) Int. Cl.: H04L 69/16

(54) **INFORMATION TRANSMISSION METHOD AND DEVICE, AND STORAGE MEDIUM**

(30) Priority: 25.03.2022 CN 202210307358
(71) Applicant: ZTE Corporation, Shenzhen Guangdong 518057 (CN)
(72) Inventor: HE, Haigang, Shenzhen, Guangdong 518057 (CN); LU, Youxiong, Shenzhen, Guangdong 518057 (CN); XING, Weimin, Shenzhen, Guangdong 518057 (CN); CHEN, Jie, Shenzhen, Guangdong 518057 (CN)
(74) Representative: Aipex B.V.
(86) International application number: PCT/CN2023/082315
(87) International publication number: WO 2023/179502

(57) **Abstract**

Provided are an information transmission method, an information transmission device, and a storage medium. The information transmission method, which is applied to a first communication node, includes: determining at least one second feedback slot mapped to a first feedback slot (S 110), where each of the at least one second feedback slot includes at least two feedback resource subsets; determining a candidate PSSCH transmission occasion corresponding to at least one feedback resource subset in each of the at least one second feedback slot (S120); and sending, in the first feedback slot, feedback information corresponding to the candidate PSSCH transmission occasion to a second communication node (S130).

## Description

### TECHNICAL FIELD

The present application relates to the field of communications, specifically, to an information transmission method, an information transmission device, and a storage medium.

### BACKGROUND

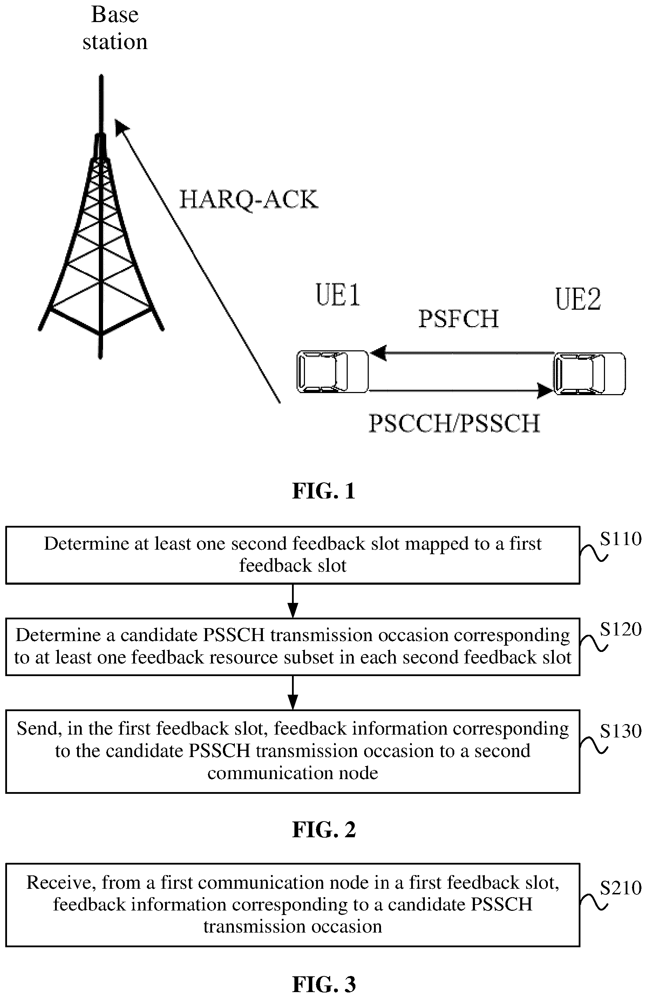

FIG. 1 is a schematic diagram of the communication between a user equipment (UE) and a base station in the related art. As shown in FIG. 1, UE1 sends one or more physical sidelink shared channels (PSSCHs) to one or more UEs, and then UE2 receives at least one PSSCH among the one or more PSSCHs and feeds back whether the PSSCH is correctly received to UE1 through a physical sidelink feedback channel (PSFCH). In addition to UE2, there may be another UE which also feeds back whether the PSSCH is correctly received to the UE1 through the PSFCH.

UE1 feeds back an N-bit hybrid automatic repeat request (HARQ)-acknowledgement (ACK) information to the base station after UE1 has received the PSFCH from UE2 and/or another UE. Each bit in the N-bit HARQ-ACK information is used for indicating whether the PSSCH is correctly received. For example, if a given bit in the HARQ-ACK information is set as 1, it indicates that the PSSCH corresponding to this given bit is correctly received; and if a given bit in the HARQ-ACK information is set as 0, it indicates that the PSSCH corresponding to this given bit is not correctly received.

For sidelink in unlicensed spectrum, how UE1 generates the N-bit HARQ-ACK information and reports the generated N-bit HARQ-ACK information to the base station is an urgent problem to be solved.

### SUMMARY

The embodiments of the present application provide an information transmission method. The information transmission method is applied to a first communication node and includes: at least one second feedback slot mapped to a first feedback slot is determined, where each of the at least one second feedback slot includes at least two feedback resource subsets; a candidate PSSCH transmission occasion corresponding to at least one feedback resource subset in each of the at least one second feedback slot is determined; and feedback information corresponding to the candidate PSSCH transmission occasion is sent to a second communication node in the first feedback slot.

The embodiments of the present application provide an information transmission method. The information transmission method is applied to a second communication node and includes: feedback information corresponding to a candidate PSSCH transmission occasion is received from a first communication node in a first feedback slot.

The embodiments of the present application provide an information transmission device. The information transmission device includes a memory and at least one processor. The memory is configured to store at least one program.

The at least one program, when executed by the at least one processor, enables the at least one processor to implement the method in any of the embodiments.

The embodiments of the present application provide a storage medium. The storage medium is configured to store a computer program which, when executed by a processor, implements the method in any of the embodiments.

### BRIEF DESCRIPTION OF DRAWINGS

FIG. 1 is a schematic diagram of the communication between a UE and a base station in the related art;
FIG. 2 is a flowchart of an information transmission method according to an embodiment of the present application;
FIG. 3 is another flowchart of an information transmission method according to an embodiment of the present application;
FIG. 4 is a schematic diagram of slot configuration according to an embodiment of the present application;
FIG. 5 is a schematic diagram of the numbering configuration for a candidate PSSCH transmission occasion according to an embodiment of the present application;
FIG. 6 is another schematic diagram of the numbering configuration for a candidate PSSCH transmission occasion according to an embodiment of the present application;
FIG. 7 is yet another schematic diagram of the numbering configuration for a candidate PSSCH transmission occasion according to an embodiment of the present application;
FIG. 8 is another schematic diagram of slot configuration according to an embodiment of the present application;
FIG. 9 is yet another schematic diagram of slot configuration according to an embodiment of the present application;
FIG. 10 is a block diagram of an information transmission apparatus according to an embodiment of the present application;
FIG. 11 is another block diagram of an information transmission apparatus according to an embodiment of the present application; and
FIG. 12 is a structure diagram of an information transmission device according to an embodiment of the present application.

### DETAILED DESCRIPTION

The embodiments of the present application will be described below in conjunction with drawings. The present application will be described in conjunction with the drawings of embodiments, and the embodiments described hereinafter are intended to explain the present application and not to limit the scope of the present application.

In a sidelink communication system, in the case where traffic needs to be transmitted between UEs, the traffic between UEs is not forwarded by a network side, that is, the traffic is not forwarded through cellular links between the UEs and a base station but is directly transmitted from a data source UE to a target UE through a sidelink. Such a direct communication mode between UEs is significantly different from the conventional cellular system communication mode. The typical applications of sidelink communication include device-to-device (D2D) communication and vehicle-to-everything (V2X) communication. The V2X communication includes vehicle-to-vehicle (V2V), vehicle-to-pedestrian (V2P) and vehicle-to-infrastructure (V2I). For the users who can apply sidelink communication for near-field communication, in addition to saving wireless spectrum resources, sidelink communication can also reduce the transmission pressure of a core network, reduce the occupation of system resources, and increase the spectral efficiency of the cellular communication system, thereby reducing the communication delay and greatly lowering the network operation cost.

Only a channel with a listen-before-talk (LBT) success can be transmitted in unlicensed spectrum. The LBT means that a communication node needs to perform contention for a resource and only when the contention for a time-frequency resource is successful can the communication node transmit information on the time-frequency resource. More specifically, in the LBT mechanism, the communication node performs the channel access procedure (to listen to the channel and determine whether the channel is idle) before information transmission, and the communication node can transmit information only in the case where the channel is listened to and determined as an idle channel.

The sidelink is designed only for the spectrum of the Intelligent Transport System (ITS) and the licensed spectrum allocated to network operators. Therefore, for the sidelink using unlicensed spectrum, how to generate HARQ-ACK information and report the HARQ-ACK information to a base station is an urgent problem to be solved.

The embodiments of the present application provide an information transmission method that supports a terminal to feed back HARQ-ACK information to a base station in the case where the sidelink uses unlicensed spectrum and multiple PSFCH reception occasions exist. The HARQ-ACK information fed back is used for indicating whether a PSSCH of the sidelink is correctly received.

In an embodiment, FIG. 2 is a flowchart of an information transmission method according to an embodiment of the present application. The present embodiment may be performed by a first communication node. The first communication node may be a terminal side devide (for example, a UE). As shown in FIG. 2, The present embodiment includes S110 to S130.

In S110, at least one second feedback slot mapped to a first feedback slot is determined.

Each of the at least one second feedback slot includes at least two feedback resource subsets. In an embodiment, the first feedback slot is one physical uplink control channel (PUCCH) slot and is a slot used for feeding back HARQ-ACK information, the second feedback slot is a slot including PSFCH resources, and the feedback resource subset may be a PSFCH resource subset. In an embodiment, the first feedback slot may correspond to one or more second feedback slots, and in sequential order sorted in time domain, the first feedback slot is located after the second feedback slots. It is to be noted that the operation where at least one second feedback slot mapped to one first feedback slot is determined is that at least one slot that is mapped to one first feedback slot and includes PSFCH resources is determined.

In S120, a candidate PSSCH transmission occasion corresponding to at least one feedback resource subset in each of the at least one second feedback slot is determined.

In an embodiment, for each slot in the slot including PSFCH resources, a candidate PSSCH transmission occasion corresponding to at least one feedback resource subset included in the slot is determined. The candidate PSSCH transmission occasion refers to a slot that can be used for transmitting a PSSCH. In an embodiment, each feedback resource subset may include multiple PSFCH resources for feeding back one or more candidate PSSCH transmission occasions. In an embodiment, the candidate PSSCH transmission occasions corresponding to two feedback resource subsets may be the same or different from each other. In the case where the candidate PSSCH transmission occasions corresponding to two feedback resource subsets are the same, it is to be understood that the candidate PSSCH transmission occasion is fed back twice, that is, the information indicating whether the PSSCH is correctly received is sent twice to the first communication node.

In S130, feedback information corresponding to the candidate PSSCH transmission occasion is sent to a second communication node in the first feedback slot.

The first communication node sends feedback information to the second communication node through the first feedback slot to indicate to the second communication node whether the PSSCH corresponding to the candidate PSSCH transmission occasion is correctly received, thereby achieving the effect where the first communication node sends HARQ-ACK information to the second communication node in the case where unlicensed spectrum is used and multiple PSFCH reception occasions exist.

In an embodiment, the at least two feedback resource subsets included in each of the at least one second feedback slot includes: each of the at least two feedback resource subsets corresponds to one PSFCH reception occasion corresponding to a candidate PSSCH transmission occasion corresponding to each feedback resource in each of the at least two feedback resource subsets. In an embodiment, the number of PSFCH reception occasions corresponding to each candidate PSSCH transmission occasion is equivalent to the number of feedback resource subsets. For example, assuming that the second feedback slot incudes two feedback resource subsets, each feedback resource in one feedback resource subset corresponds to the first PSFCH reception occasion corresponding to one candidate PSSCH transmission occasion, and each feedback resource in the other feedback resource subset corresponds to the second PSFCH reception occasion corresponding to one candidate PSSCH transmission occasion.

In an embodiment, the candidate PSSCH transmission occasion corresponding to at least one feedback resource subset in each of the at least one second feedback slot is determined in the following manner: a candidate PSSCH transmission occasion corresponding to one feedback resource subset in each of the at least one second feedback slot is determined, where each feedback resource in one feedback resource subset corresponds to the first PSFCH reception occasion corresponding to the candidate PSSCH transmission occasion. In an embodiment, for each of the at least one second feedback slot, the candidate PSSCH transmission occasion is determined through one feedback resource subset. Each feedback resource in the feedback resource subset corresponds to the first PSFCH reception occasion corresponding to one candidate PSSCH transmission occasion.

In an embodiment, the candidate PSSCH transmission occasion corresponding to at least one feedback resource subset in each of the at least one second feedback slot is determined in the following manner: a candidate PSSCH transmission occasion corresponding to one feedback resource subset in each of the at least one second feedback slot is determined, where each feedback resource in one feedback resource subset corresponds to the last PSFCH reception occasion corresponding to the candidate PSSCH transmission occasion. In an embodiment, for each of the at least one second feedback slot, the candidate PSSCH transmission occasion is determined through one feedback resource subset. Each feedback resource in the feedback resource subset corresponds to the last PSFCH reception occasion among multiple PSFCH reception occasions corresponding to one candidate PSSCH transmission occasion.

In an embodiment, the candidate PSSCH transmission occasion corresponding to at least one feedback resource subset in each of the at least one second feedback slot is determined in the following manner: a candidate PSSCH transmission occasion corresponding to an m-th feedback resource subset in each of the at least one second feedback slot is determined, where m is greater than or equal to 1 and less than or equal to M, and each of the at least one second feedback slot includes M feedback resource subsets. In an embodiment, for each of the at least one second feedback slot, the candidate PSSCH transmission occasion is determined through one feedback resource subset. Each feedback resource in the feedback resource subset corresponds to an m-th PSFCH reception occasion corresponding to one candidate PSSCH transmission occasion.

In an embodiment, the candidate PSSCH transmission occasion corresponding to at least one feedback resource subset in each of the at least one second feedback slot is determined in the following manner: a candidate PSSCH transmission occasion corresponding to a first feedback resource subset in at least one second feedback slot is determined, and a candidate PSSCH transmission occasion corresponding to the first feedback resource subset and a second feedback resource subset in the at least one second feedback slot is determined; where each feedback resource in the first feedback resource subset corresponds to the first PSFCH reception occasion corresponding to the candidate PSSCH transmission occasion, and each feedback resource in the second feedback resource subset corresponds to the last PSFCH reception occasion corresponding to the candidate PSSCH transmission occasion. In an embodiment, the candidate PSSCH transmission occasion may be determined according to the first PSFCH reception occasion and the last PSFCH reception occasion. That is, for at least one slot in the second feedback slot, the candidate PSSCH transmission occasion corresponding to the first feedback resource subset in the second feedback slot is determined; for at least one slot in the second feedback slot, the candidate PSSCH transmission occasion corresponding to the first feedback resource subset and the second feedback resource subset in the second feedback slot are determined. Each feedback resource in the first feedback resource subset corresponds to the first PSFCH reception occasion corresponding to the candidate PSSCH transmission occasion; each feedback resource in the second feedback resource subset corresponds to the last PSFCH reception occasion corresponding to the candidate PSSCH transmission occasion.

In an embodiment, the candidate PSSCH transmission occasion corresponding to at least one feedback resource subset in each of the at least one second feedback slot is determined in the following manner: a candidate PSSCH transmission occasion corresponding to a first feedback resource subset in at least one second feedback slot is determined, and a candidate PSSCH transmission occasion corresponding to the first feedback resource subset and a second feedback resource subset in the at least one second feedback slot is determined; where each feedback resource in the first feedback resource subset corresponds to an m-th PSFCH reception occasion corresponding to the candidate PSSCH transmission occasion, m is greater than or equal to 1 and less than or equal to M, each of the at least one second feedback slot includes M feedback resource subsets, and each feedback resource in the second feedback resource subset corresponds to the last PSFCH reception occasion corresponding to the candidate PSSCH transmission occasion. In an embodiment, the candidate PSSCH transmission occasion may be determined according to the m-th PSFCH reception occasion and the last PSFCH reception occasion. That is, for at least one slot in the second feedback slot, the candidate PSSCH transmission occasion corresponding to the first feedback resource subset in the second feedback slot is determined; for at least one slot in the second feedback slot, the candidate PSSCH transmission occasion corresponding to the first feedback resource subset and the second feedback resource subset in the second feedback slot is determined. Each feedback resource in the first feedback resource subset corresponds to the m-th PSFCH reception occasion corresponding to the candidate PSSCH transmission occasion; each feedback resource in the second feedback resource subset corresponds to the last PSFCH reception occasion among m PSFCH reception occasions corresponding to the candidate PSSCH transmission occasion.

In an embodiment, the value of m is determined in the following manner: the value of m is determined according to received control information. In an embodiment, the first communication node receives control information sent from the second communication node and determines the value of m according to the control information.

In an embodiment, the control information includes at least one of the following: radio resource control (RRC) signaling, system information block (SIB) information or downlink control information (DCI).

In an embodiment, at least one of the following is carried in the control information: the number allocated to a feedback resource subset or the number of PSFCH reception occasions.

In an embodiment, the operation where the value of m is determined according to the received control information includes one of the following: the number assigned to the feedback resource subset is determined to be the value of m; the sum value of the number assigned to the feedback resource subset and 1 is determined to be the value of m; or the number of PSFCH reception occasions is determined to be the value of m.

In an embodiment, in the case where the control information includes the number assigned to the feedback resource subset, the second communication node may determine, according to the control information, that the value of m is equal to the number assigned to the feedback resource subset or is equal to the sum value of the number assigned to the feedback resource subset and 1. It is to be understood that in the case where the number assigned to the feedback resource subset starts from 0, the value of m is equal to the sum value of the number assigned to the feedback resource subset and 1; in the case where the number assigned to the feedback resource subset starts from 1, the value of m is equal to the number assigned to the feedback resource subset. In the case where the control information includes the number of PSFCH reception occasions, the second communication node may determine, according to the control information, that the value of m is equal to the number of PSFCH reception occasions.

In an embodiment, the number assigned to the candidate PSSCH transmission occasion is determined in the following manner: the number assigned to the candidate PSSCH transmission occasion is determined according to a PSFCH period value, an f-th second feedback slot sorted in reverse order in time domain and an nf-th candidate PSSCH transmission occasion mapped to the f-th second feedback slot. In an embodiment, j may be used to represent the number assigned to the candidate PSSCH transmission occasion, and j may be determined according to the following formula: *j = f* × *T* + *n_{f}*. In the aforementioned formula, T denotes the PSFCH period value; f denotes an f-th second feedback slot among F second feedback slots that are mapped to one first feedback slot and sorted from late to early in time domain, where f is an integer in [0, F); *n_{f}* denotes an nf-th candidate PSSCH transmission occasion mapped to the f-th second feedback slot.

In an embodiment, the number assigned to a j-th candidate PSSCH transmission occasion among all the candidate PSSCH transmission occasions sorted in reverse order in time domain is j. In an embodiment, the number assigned to a j-th candidate PSSCH transmission occasion among all the candidate PSSCH transmission occasions sorted from late to early in time domain is j.

In an embodiment, the number assigned to a bit of the feedback information is equivalent to the number assigned to the candidate PSSCH transmission occasion. In the present embodiment, the first communication node sends feedback information to the second communication node, and the feedback information of an i-th bit fed back by the first communication node corresponds to the feedback information corresponding to the i-th candidate PSSCH transmission occasion.

In an embodiment, in sequential order sorted in time domain, for the first second feedback slot, the candidate PSSCH transmission occasion is a candidate PSSCH transmission occasion corresponding to the first feedback resource subset and the second feedback resource subset; and in sequential order sorted in time domain, for another second feedback slot other than the first second feedback slot, the candidate PSSCH transmission occasion is a candidate PSSCH transmission occasion corresponding to the first feedback resource subset.

In an embodiment, at least one second feedback slot mapped to the first feedback slot is determined in the following manner: the first feedback slot is determined according to time domain location information of a PUCCH indicated by DCI or an RRC message, and at least one second feedback slot mapped to the first feedback slot is determined according to the timing relationship between a PSFCH and a PUCCH indicated by the DCI or the RRC message; where the first feedback slot is one PUCCH slot, the at least one second feedback slot is a slot including PSFCH resources, and each of the at least two feedback resource subsets is a PSFCH resource subset.

In an embodiment, FIG. 3 is another flowchart of an information transmission method according to an embodiment of the present application. The present embodiment may be performed by a second communication node. The second communication node may be a base station side device. As shown in FIG. 3, the present embodiment includes S210.

In S210, feedback information corresponding to a candidate PSSCH transmission occasion is received from a first communication node in a first feedback slot.

In an embodiment, the second communication node receives feedback information corresponding to the candidate PSSCH transmission occasion from the first communication node in the first feedback slot to timely learn whether data between the first communication node and another first communication node is correctly transmitted.

In Example 1, the transmission process of the feedback information will be described using an example in which the first communication node is a terminal and the second communication node is a base station. In an embodiment, the terminal reports HARQ-ACK information to the base station in the following manner: F (which is greater than or equal to 1) slots (that is, the second feedback slots in the above embodiments) that are mapped to one first feedback slot n and each include PSFCH resources are determined, where each slot including PSFCH resources includes M (which is greater than or equal to 2) PSFCH resource subsets; for each slot among the slots each including PSFCH resources, candidate PSSCH transmission occasions (that is, occasions for candidate PSSCH transmissions) corresponding to at least one PSFCH resource subset included in the slot are determined; and the HARQ-ACK information is reported to the base station, where the HARQ-ACK information includes HARQ-ACK information for the candidate PSSCH transmission occasions.

For one candidate PSSCH transmission occasion that belongs to the candidate PSSCH transmission occasions, the occasion when the first communication node may send a PSSCH does not mean that the first communication node must send a PSSCH on the candidate PSSCH transmission occasion.

Optionally, M (which is greater than or equal to 2) PSFCH resource subsets included in the slot including PSFCH resources, include: for one PSFCH resource subset, each PSFCH resource in the PSFCH resource subset corresponds to the first PSFCH reception occasion for one PSSCH; for one PSFCH resource subset, each PSFCH resource in the PSFCH resource subset corresponds to the second PSFCH reception occasion for one PSSCH; and so on.

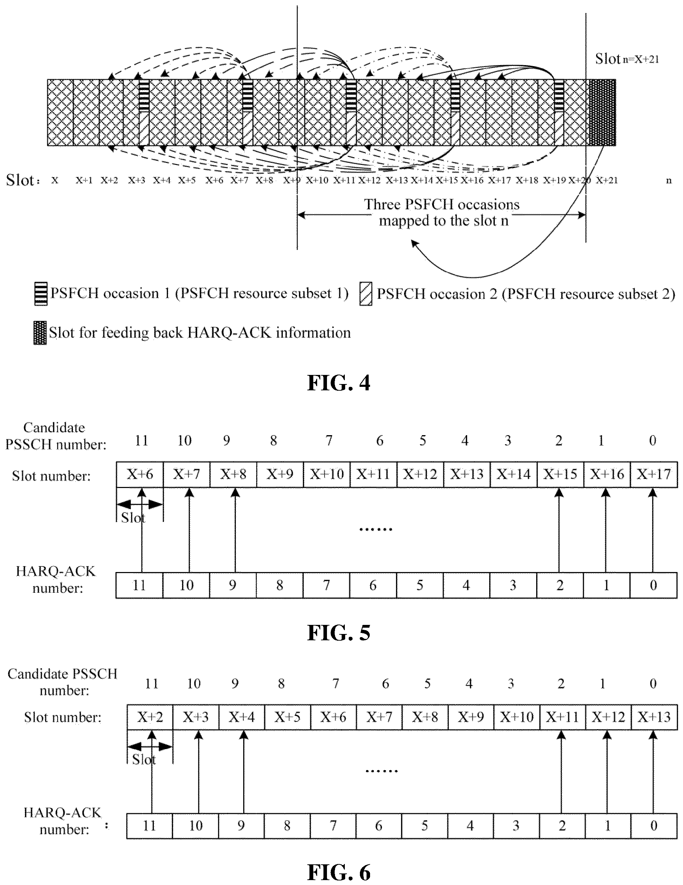

FIG. 4 is a schematic diagram of slot configuration according to an embodiment of the present application. The aforementioned process will be described in detail below using FIG. 4 as an example. Before the aforementioned process is described in detail, FIG. 4 will be described first.

In FIG. 4, one out of every four sidelink slots includes a PSFCH slot, that is, the period T of the PSFCH is 4.

In FIG. 4, the first feedback slot n is the slot in which the terminal reports HARQ-ACK information to the base station, and the number of the first feedback slot n is represented in the form of X + 21. It is assumed that one set of timing values of slots from PSFCH to HARQ feedback is {2, 6, 10}. The slots which are prior to the slot n and are at the slot intervals of {2, 6, 10} from the slot n are slots {X+19, X+15, X+11}, and the three slots each include PSFCH resources. Therefore, F slots that are mapped to the slot n and each include PSFCH resources are slots {X+19, X+15, X+11}, where F=3.

In FIG. 4, from the perspective of UE2 that receives a PSSCH, for the PSSCH to be received, UE2 needs to feed back the HARQ-ACK information of the sidelink to UE1 through a PSFCH. For one PSSCH in one slot, M (which is equal to 2) PSFCH transmission occasions exist for UE2. From the perspective of UE2, a PSFCH transmission occasion is a PSFCH sending occasion. The first PSFCH transmission occasion is the first slot including PSFCH resources after G (which is equal to 2 in FIG. 4) slots, and the second transmission occasion is the next slot including PSFCH resources after the slot where the first PSFCH transmission occasion is located. Here, G denotes the minimum slot interval between PSSCH reception and PSFCH sending. According to the above description, for the PSSCH in the slot X+2, the first PSFCH transmission occasion is located in the slot X+7, and the second PSFCH transmission occasion is located in the slot X+11.

Similarly, from the perspective of UE1 that sends a PSSCH, UE1 needs to receive the HARQ-ACK information of the sidelink fed back through the PSFCH from UE2 which is the receiving UE for the PSSCH. For one PSSCH in one slot, M PSFCH transmission occasions exist for UE1. From the perspective of UE1, a PSFCH transmission occasion is a PSFCH reception occasion. The first PSFCH transmission occasion is the first slot including PSFCH resources after G (which is equal to 2 in FIG. 4) slots, and the second transmission occasion is the next slot including PSFCH resources after the slot where the first PSFCH transmission occasion is located. Here, G denotes the minimum slot interval between PSSCH sending and PSFCH reception.

Each slot including PSFCH resources includes M PSFCH resource subsets, and each of the M PSFCH resource subsets corresponds to one respective PSFCH transmission occasion. In FIG. 4, M is equal to 2, and the slot including PSFCH resources includes the PSFCH resource subset 1 and the PSFCH resource subset 2. The PSFCH resource subset 1 includes multiple PSFCH resources, and each PSFCH resource corresponds to one first PSFCH transmission occasion. Similarly, the PSFCH resource subset 2 includes multiple PSFCH resources, and each PSFCH resource corresponds to one second PSFCH transmission occasion.

Based on the description with respect to FIG. 4, the terminal performs the following process.

The terminal determines F (which is greater than or equal to 1) slots that are mapped to one slot n and each include PSFCH resources. As described above, the F (which is greater than or equal to 1) slots that are mapped to the slot n and each include PSFCH resources are the slots X+19, X+15, and X+11.

For the slot including PSFCH resources, the candidate PSSCH transmission occasions corresponding to at least one PSFCH resource subset included in the slot are determined. For the slot X+19, the candidate PSSCH transmission occasions determined through the PSFCH resource subset 1 are located in slots {X+17, X+16, X+15, X+14}.

UE1 reports HARQ-ACK information to the base station, where the HARQ-ACK information includes HARQ-ACK information for the candidate PSSCH transmission occasions.

The terminal determines the candidate PSSCH transmission occasions for the F PSFCH slots and, for all these candidate PSSCH transmission occasions, feeds back the HARQ-ACK information to the base station. The slot in which UE1 reports the HARQ-ACK information to the base station is the PUCCH slot n, and the terminal reports the HARQ-ACK information to the base station in the PUCCH slot n through a PUCCH or a PUSCH.

In Example 2, the transmission process of the feedback information will be described using an example in which the first communication node is a terminal, the second communication node is a base station and the terminal determines the candidate PSSCH transmission occasion through the first PSFCH reception occasion. In an embodiment, the terminal reports HARQ-ACK information to the base station according to the following steps. F (which is greater than or equal to 1) slots that are mapped to one slot n and each include PSFCH resources are determined, where each slot including PSFCH resources includes M (which is greater than or equal to 2) PSFCH resource subsets. For each slot including PSFCH resources, the candidate PSSCH transmission occasions are determined through one PSFCH resource subset, where each PSFCH resource in the PSFCH resource subset corresponds to the first PSFCH transmission occasion for one PSSCH. The HARQ-ACK information is reported to the base station, where the HARQ-ACK information includes HARQ-ACK information for the candidate PSSCH transmission occasions.

The aforementioned process will be described in detail below using FIG. 4 as an example. For the description of FIG. 4, reference is made to Example 1.

The terminal determines F (which is greater than or equal to 1) slots that are mapped to one slot n and each include PSFCH resources, and the slots including PSFCH resources each include M (which is greater than or equal to 2) PSFCH resource subsets. In FIG. 4, F (which is greater than or equal to 1) slots that are mapped to the slot n and each include PSFCH resources are slots {X+19, X+15, X+11 }. Each of the three slots includes M (which is equal to 2) PSFCH resource subsets that are the PSFCH resource subset 1 and the PSFCH resource subset 2, respectively.

For each slot including PSFCH resources, candidate PSSCH transmission occasions are determined through one PSFCH resource subset. Each PSFCH resource in the PSFCH resource subset corresponds to the first PSFCH transmission occasion for one PSSCH. For the slot X+19 including PSFCH resources, the PSFCH resource subset 1 includes multiple PSFCH resources, and each PSFCH resource corresponds to the first PSFCH transmission occasion for one PSSCH. At least one PSFCH resource in the PSFCH resource subset 1 of the slot X+19 corresponds to a PSSCH resource in the slot X+14, at least one PSFCH resource corresponds to a PSSCH resource in the slot X+15, at least one PSFCH resource corresponds to a PSSCH resource in the slot X+16, and at least one PSFCH resource corresponds to a PSSCH in the slot X+17. Therefore, the candidate PSSCH transmission occasions determined through the PSFCH resource subset 1 of the slot X+19 including PSFCH resources are located in slots {X+14, X+15, X+16, X+17}. Similarly, the candidate PSSCH transmission occasions determined through the PSFCH resource subset 1 in the slot X+15 are located in slots {X+10, X+11, X+12, X+13}, and the candidate PSSCH transmission occasions determined through the PSFCH resource subset 1 in the slot X+1 1 are located in slots {X+6, X+7, X+8, X+9}. Therefore, according to the above process, all the candidate PSSCH transmission occasions determined are located in slots {X+6, X+7, X+8, X+9, X+10, X+11, X+12, X+13, X+14, X+15, X+16, X+17}, respectively.

UE1 reports HARQ-ACK information to the base station, where the HARQ-ACK information includes HARQ-ACK information for the candidate PSSCH transmission occasions. The terminal feeds back 12-bit HARQ-ACK information to the base station, where each bit of HARQ-ACK information corresponds to one candidate PSSCH transmission occasion among the candidate PSSCH transmission occasions located in slots {X+6, X+7, X+8, X+9, X+10, X+11, X+12, X+13, X+14, X+15, X+16, X+17}. The slot in which UE1 reports the HARQ-ACK information to the base station is the PUCCH slot n, and the terminal reports the HARQ-ACK information to the base station in the PUCCH slot n through a PUCCH or a PUSCH.

Optionally, the candidate PSSCH transmission occasions are numbered, and the number j of the candidate PSSCH transmission occasion is determined according to the following numbering rule: *j = f* × *T* + *n_{f}*. In the aforementioned formula, T denotes the PSFCH period value; f denotes an f-th slot including PSFCH resources among F slots that are mapped to one slot, each include PSFCH resources and are sorted from late to early in time domain, where f is an integer in [0, F); *n_{f}* denotes an nf-th candidate PSSCH transmission occasion mapped to the f-th slot including PSFCH resources.

Based on the numbering rule, the numbers of the candidate PSSCH transmission occasions located in slots {X+6, X+7, X+8, X+9, X+10, X+11, X+12, X+13, X+14, X+15, X+16, X+17} are {11, 10, 9, 8, 7, 6, 5, 4, 3, 2, 1, 0}, respectively. FIG. 5 is a schematic diagram of the numbering configuration for a candidate PSSCH transmission occasion according to an embodiment of the present application. As shown in FIG. 5, the zero-th bit of the 12 HARQ bits corresponds to the candidate PSSCH transmission occasion numbered as 0; the first bit of the 12 HARQ bits corresponds to the candidate PSSCH transmission occasion numbered as 1; and so on.

In Example 3, the transmission process of the feedback information will be described using an example in which the first communication node is a terminal, the second communication node is a base station and the terminal determines the candidate PSSCH transmission occasion through the last PSFCH reception occasion. In an embodiment, the terminal reports HARQ-ACK information to the base station in the following manner: F (which is greater than or equal to 1) slots that are mapped to one slot n and each include PSFCH resources are determined, where the slot including PSFCH resources includes M (which is greater than or equal to 2) PSFCH resource subsets; for each slot including PSFCH resources, the candidate PSSCH transmission occasions are determined through one PSFCH resource subset, where each PSFCH resource in the PSFCH resource subset corresponds to the last PSFCH transmission occasion among M PSFCH transmission occasions for one PSSCH; and the HARQ-ACK information is reported to the base station, where the HARQ-ACK information includes HARQ-ACK information for the candidate PSSCH transmission occasions.

The aforementioned process will be described in detail below using FIG. 4 as an example. For the description of FIG. 4, reference is made to Example 1.

The terminal determines F (which is greater than or equal to 1) slots that are mapped to one slot n and each include PSFCH resources, and the slots including PSFCH resources each include M (which is greater than or equal to 2) PSFCH resource subsets. In FIG. 4, F (which is greater than or equal to 1) slots that are mapped to the slot n and each include PSFCH resources are slots {X+19, X+15, X+11 }. Each of the three slots includes M (which is equal to 2) PSFCH resource subsets that are the PSFCH resource subset 1 and the PSFCH resource subset 2, respectively.

For each slot including PSFCH resources, candidate PSSCH transmission occasions are determined through one PSFCH resource subset. Each PSFCH resource in the PSFCH resource subset corresponds to the last PSFCH transmission occasion among M PSFCH transmission occasions for one PSSCH. For the slot X+19 including PSFCH resources, the PSFCH resource subset 2 includes multiple PSFCH resources, and each PSFCH resource corresponds to the last PSFCH transmission occasion among M PSFCH transmission occasions for one PSSCH. At least one PSFCH resource in the PSFCH resource subset 2 of the slot X+19 corresponds to a PSSCH resource in the slot X+10, at least one PSFCH resource corresponds to a PSSCH resource in the slot X+11, at least one PSFCH resource corresponds to a PSSCH resource in the slot X+12, and at least one PSFCH resource corresponds to a PSSCH in the slot X+13. Therefore, the candidate PSSCH transmission occasions determined through the PSFCH resource subset 2 in the slot X+19 including PSFCH resources are located in slots {X+10, X+11, X+12, X+13}. Similarly, the candidate PSSCH transmission occasions determined through the PSFCH resource subset 2 in the slot X+15 are located in slots {X+6, X+7, X+8, X+9}, and the candidate PSSCH transmission occasions determined through the PSFCH resource subset 2 in the slot X+11 are located in slots {X+2, X+3, X+4, X+5}. Therefore, according to the above process, all the candidate PSSCH transmission occasions determined are located in slots {X+2, X+3, X+4, X+5, X+6, X+7, X+8, X+9, X+10, X+11, X+12, X+13}, respectively.

UE1 reports HARQ-ACK information to the base station, where the HARQ-ACK information includes HARQ-ACK information for the candidate PSSCH transmission occasions. The terminal feeds back 12-bit HARQ-ACK information to the base station, where each bit of HARQ-ACK information corresponds to one candidate PSSCH transmission occasion among the candidate PSSCH transmission occasions located in slots {X+2, X+3, X+4, X+5, X+6, X+7, X+8, X+9, X+10, X+11, X+12, X+13}. The slot in which UE1 reports the HARQ-ACK information to the base station is the PUCCH slot n, and the terminal reports the HARQ-ACK information to the base station in the PUCCH slot n through a PUCCH or a PUSCH.

Optionally, the candidate PSSCH transmission occasions are numbered, and the number j of the candidate PSSCH transmission occasion is determined according to the following numbering rule: *j = f* × *T* + *n_{f}.*

In the aforementioned formula, T denotes the PSFCH period value; f denotes an f-th slot including PSFCH resources among F slots that are mapped to one slot, each include PSFCH resources and are sorted from late to early in time domain, where f is an integer in [0, F); *n_{f}* denotes an nf-th candidate PSSCH transmission occasion mapped to the f-th slot including PSFCH resources.

Based on the numbering rule, the numbers of the candidate PSSCH transmission occasions located in slots {X+2, X+3, X+4, X+5, X+6, X+7, X+8, X+9, X+10, X+11, X+12, X+13} are {11, 10, 9, 8, 7, 6, 5, 4, 3, 2, 1, 0}, respectively. FIG. 6 is another schematic diagram of the numbering configuration for a candidate PSSCH transmission occasion according to an embodiment of the present application. As shown in FIG. 6, the zero-th bit of the 12 HARQ bits corresponds to the candidate PSSCH transmission occasion numbered as 0; the first bit of the 12 HARQ bits corresponds to the candidate PSSCH transmission occasion numbered as 1; and so on.

In Example 4, the transmission process of the feedback information will be described using an example in which the first communication node is a terminal, the second communication node is a base station and the terminal determines the candidate PSSCH transmission occasion through the m-th PSFCH reception occasion. In an embodiment, the terminal reports HARQ-ACK information to the base station in the following manner: F (which is greater than or equal to 1) slots that are mapped to one slot n and each include PSFCH resources are determined, where the slot including PSFCH resources includes M (which is greater than or equal to 2) PSFCH resource subsets; for each slot including PSFCH resources, the candidate PSSCH transmission occasions are determined through one PSFCH resource subset, where each PSFCH resource in the PSFCH resource subset corresponds to the m-th PSFCH transmission occasion for one PSSCH, and m is an integer in [1, M]; before the value of m is determined, the terminal receives the control information sent from the base station, and the terminal determines the value of m based on the received control information; and the HARQ-ACK information is reported to the base station, where the HARQ-ACK information includes HARQ-ACK information for the candidate PSSCH transmission occasions.

The aforementioned process will be described in detail below using FIG. 4 as an example. For the description of FIG. 4, reference is made to Example 1.

The terminal determines F (which is greater than or equal to 1) slots that are mapped to one slot n and each include PSFCH resources, and the slots including PSFCH resources each include M (which is greater than or equal to 2) PSFCH resource subsets. In FIG. 4, F (which is greater than or equal to 1) slots that are mapped to the slot n and each include PSFCH resources are slots {X+19, X+15, X+11 }. Each of the three slots includes M (which is equal to 2) PSFCH resource subsets that are the PSFCH resource subset 1 and the PSFCH resource subset 2, respectively.

In the case where M is equal to 2 and m is equal to 1, the terminal determines F (which is greater than or equal to 1) slots that are mapped to one slot n and each include a PSFCH resource to be {X+19, X+15, X+11}. Through {PSFCH resource subset 1 in the slot X+19, PSFCH resource subset 1 in the slot X+15, PSFCH resource subset 1 in the slot X+11}, the slots where the candidate PSSCH transmission occasions determined are located are slots {X+14, X+15, X+16, X+17}, {X+10, X+11, X+12, X+13}, and {X+6, X+7, X+8, X+9}, respectively. Therefore, all the candidate PSSCH transmission occasions determined are located in slots {X+6, X+7, X+8, X+9, X+10, X+11, X+12, X+13, X+14, X+15, X+16, X+17}, respectively. The terminal reports 12-bit HARQ-ACK information to the base station for the 12 candidate PSSCH transmission occasions.

In the case where M is equal to 2 and m is equal to 2, the terminal determines F (which is greater than or equal to 1) slots that are mapped to one slot n and each include a PSFCH resource to be {X+19, X+15, X+11}. Through {PSFCH resource subset 2 in the slot X+19, PSFCH resource subset 2 in the slot X+15, PSFCH resource subset 2 in the slot X+11}, the slots where the candidate PSSCH transmission occasions determined are located are slots {X+10, X+11, X+12, X+13}, {X+6, X+7, X+8, X+9}, and {X+2, X+3, X+4, X+5}, respectively. Therefore, all the candidate PSSCH transmission occasions determined are located in slots {X+2, X+3, X+4, X+5, X+6, X+7, X+8, X+9, X+10, X+11, X+12, X+13}, respectively. The terminal reports 12-bit HARQ-ACK information to the base station for the 12 candidate PSSCH transmission occasions.

Optionally, the terminal may determine the value of m in the following manner.

The terminal receives control information sent from the base station, the control information includes the number assigned to the PSFCH resource subset, and the terminal determines, based on the received control information, that the value of m is equal to the number assigned to the PSFCH resource subset or is equal to the sum value of the number assigned to the PSFCH resource subset and 1. Alternatively, the terminal receives control information sent from the base station, the control information includes the number of PSFCH transmission occasions, and the terminal determines, based on the received control information, that the value of m is equal to the number of PSFCH transmission occasions.

Optionally, the control information may include at least one of the following: RRC signaling, SIB information or DCI.

In Example 5, the transmission process of the feedback information will be described using an example in which the first communication node is a terminal, the second communication node is a base station and the terminal determines the candidate PSSCH transmission occasion through the first PSFCH reception occasion and the last PSFCH reception occasion. In an embodiment, the terminal reports HARQ-ACK information to the base station according to the following steps. F (which is greater than or equal to 1) slots that are mapped to one slot n and each include PSFCH resources are determined, where the slot including PSFCH resources includes M (which is greater than or equal to 2) PSFCH resource subsets. For at least one slot among the slots including PSFCH resources, the candidate PSSCH transmission occasions corresponding to the first PSFCH resource subset of the slot are determined. For at least one slot among the slots including PSFCH resources, the candidate PSSCH transmission occasions corresponding to the first PSFCH resource subset and the second PSFCH resource subset of the slot are determined, where each PSFCH resource in the first PSFCH resource subset corresponds to the first PSFCH transmission occasion for one PSSCH, and each PSFCH resource in the second PSFCH resource subset corresponds to the last PSFCH transmission occasion among M PSFCH transmission occasions for one PSSCH. The HARQ-ACK information is reported to the base station, where the HARQ-ACK information includes HARQ-ACK information for the candidate PSSCH transmission occasions.

The aforementioned process will be described in detail below using FIG. 4 as an example. For the description of FIG. 4, reference is made to Example 1.

The terminal determines F (which is greater than or equal to 1) slots that are mapped to one slot n and each include PSFCH resources, and the slots including PSFCH resources each include M (which is greater than or equal to 2) PSFCH resource subsets. In FIG. 4, F (which is greater than or equal to 1) slots that are mapped to the slot n and each include PSFCH resources are slots {X+19, X+15, X+11 }. Each of the three slots includes M (which is equal to 2) PSFCH resource subsets that are the PSFCH resource subset 1 and the PSFCH resource subset 2, respectively.

For at least one slot among the slots including PSFCH resources, the candidate PSSCH transmission occasions corresponding to the first PSFCH resource subset of the slot are determined. For at least one slot among the slots including PSFCH resources, the candidate PSSCH transmission occasions corresponding to the first PSFCH resource subset and the second PSFCH resource subset of the slot are determined. Each PSFCH resource in the first PSFCH resource subset corresponds to the first PSFCH transmission occasion for one PSSCH. Each PSFCH resource in the second PSFCH resource subset corresponds to the last PSFCH transmission occasion among M PSFCH transmission occasions corresponding to one PSSCH. According to the above description, F (which is greater than or equal to 1) slots including PSFCH resources are slots {X+19, X+15, X+11}. In this example, the first PSFCH resource subset corresponds to the PSFCH resource subset 1 in FIG. 4, and each PSFCH resource in the PSFCH resource subset 1 corresponds to the first PSFCH transmission occasion for one PSSCH. The second PSFCH resource subset corresponds to the PSFCH resource subset M (which is equal to 2) in FIG. 4, and each PSFCH resource in the PSFCH resource subset M (which is equal to 2) corresponds to the last PSFCH transmission occasion for one PSSCH.

In this example, among the F (which is greater than or equal to 1) slots {X+19, X+15, X+11} including PSFCH resources, for the slots X+19 and X+15, the candidate PSSCH transmission occasions are determined based on the first PSFCH resource subset. The candidate PSSCH transmission occasions determined through the first PSFCH resource subset (the PSFCH resource subset 1) of the slot X+19 including PSFCH resources are located in slots {X+14, X+15, X+16, X+17}. The candidate PSSCH transmission occasions determined through the first PSFCH resource subset (the PSFCH resource subset 1) of the slot X+15 including PSFCH resources are located in slots {X+10, X+11, X+12, X+13}.

In this example, among the F (which is greater than or equal to 1) slots {X+19, X+15, X+ 11} including PSFCH resources, for the slot X+ 11, the candidate PSSCH transmission occasions are determined based on the first PSFCH resource subset (the PSFCH resource subset 1) and the second PSFCH resource subset (the PSFCH resource subset M (which is equal to 2)). The candidate PSSCH transmission occasions determined through the first PSFCH resource subset are located in slots {X+6, X+7, X+8, X+9}, and the candidate PSSCH transmission occasions determined through the second PSFCH resource subset are located in slots {X+2, X+3, X+4, X+5}. Therefore, the candidate PSSCH transmission occasions determined based on the first PSFCH resource subset and the second PSFCH resource subset of the slot X+11 are located in slots {X+2, X+3, X+4, X+5, X+6, X+7, X+8, X+9}.

In summary, for the F (which is greater than or equal to 1) slots {X+19, X+15, X+11} including PSFCH resources, all the candidate PSSCH transmission occasions determined are located in slots {X+2, X+3, X+4, X+5, X+6, X+7, X+8, X+9, X+10, X+11, X+12, X+13, X+14, X+15, X+16, X+17}, respectively.

UE1 reports HARQ-ACK information to the base station, where the HARQ-ACK information includes HARQ-ACK information for the candidate PSSCH transmission occasions. The terminal feeds back 16-bit HARQ-ACK information to the base station, where each bit of HARQ-ACK information corresponds to one candidate PSSCH transmission occasion among the candidate PSSCH transmission occasions located in slots {X+2, X+3, X+4, X+5, X+6, X+7, X+8, X+9, X+10, X+11, X+12, X+13, X+14, X+15, X+16, X+17}. The slot in which UE1 reports the HARQ-ACK information to the base station is the PUCCH slot n, and the terminal reports the HARQ-ACK information to the base station in the PUCCH slot n through a PUCCH or a PUSCH.

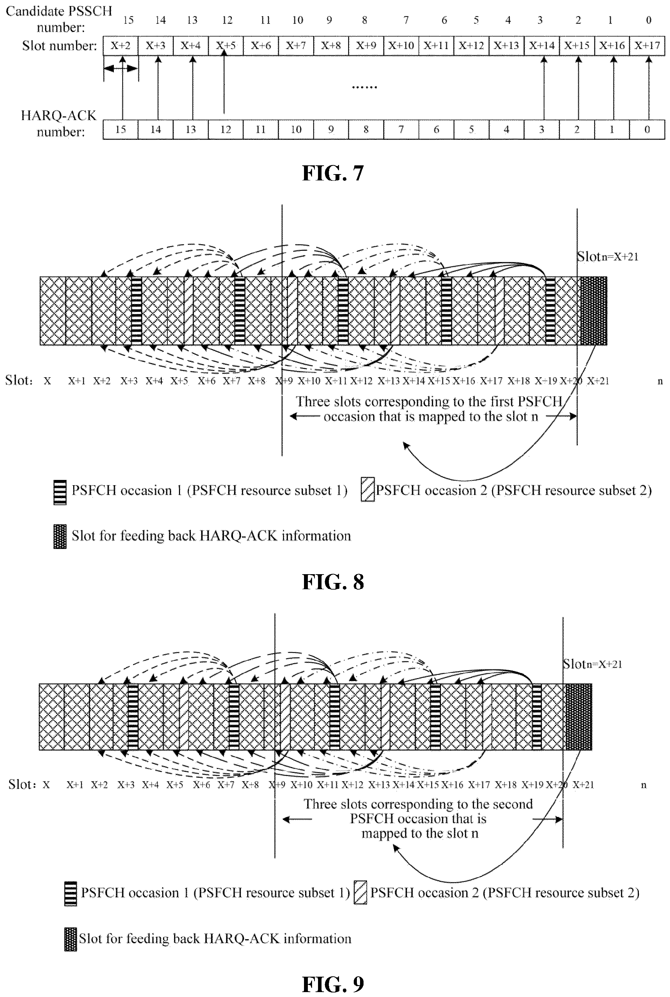

Optionally, the above candidate PSSCH transmission occasions are numbered according to the following numbering rule: among all the candidate PSSCH transmission occasions determined in the F (which is greater than or equal to 1) slots including PSFCH resources, the number assigned to a j-th candidate PSSCH transmission occasion sorted from late to early in time domain is j. Based on the numbering rule, the numbers of the candidate PSSCH transmission occasions located in slots {X+2, X+3, X+4, X+5, X+6, X+7, X+8, X+9, X+10, X+11, X+12, X+13, X+14, X+15, X+16, X+17} are {15, 14,13, 12, 11, 10, 9, 8, 7, 6, 5, 4, 3, 2, 1, 0}, respectively. FIG. 7 is yet another schematic diagram of the numbering configuration for a candidate PSSCH transmission occasion according to an embodiment of the present application. As shown in FIG. 7, the zero-th bit of the 16 HARQ bits corresponds to the candidate PSSCH transmission occasion numbered as 0; the first bit of the 16 HARQ bits corresponds to the candidate PSSCH transmission occasion numbered as 1; and so on.

In Example 6, the transmission process of the feedback information will be described using an example in which the first communication node is a terminal, the second communication node is a base station and the terminal determines the candidate PSSCH transmission occasion through the m-th PSFCH reception occasion and the last PSFCH reception occasion. In an embodiment, the terminal reports HARQ-ACK information to the base station according to the following steps. F (which is greater than or equal to 1) slots that are mapped to one slot n and each include PSFCH resources are determined, where the slot including PSFCH resources includes M (which is greater than or equal to 2) PSFCH resource subsets. For each slot including PSFCH resources, the candidate PSSCH transmission occasions corresponding to at least one PSFCH resource subset included in the slot are determined. For at least one slot among the slots including PSFCH resources, the candidate PSSCH transmission occasions corresponding to the first PSFCH resource subset of the slot are determined. For at least one slot among the slots including PSFCH resources, the candidate PSSCH transmission occasions corresponding to the first PSFCH resource subset and the second PSFCH resource subset of the slot are determined, where each PSFCH resource in the first PSFCH resource subset corresponds to the m-th PSFCH transmission occasion for one PSSCH, m is an integer in [1, M), and each PSFCH resource in the second PSFCH resource subset corresponds to the last PSFCH transmission occasion among M PSFCH transmission occasions corresponding to one PSSCH. Before the value of m is determined, the terminal receives the control information sent from the base station, and the terminal determines the value of m based on the received control information. The HARQ-ACK information is reported to the base station, where the HARQ-ACK information includes HARQ-ACK information for the candidate PSSCH transmission occasions.

The aforementioned process will be described in detail below using FIG. 4 as an example. For the description of FIG. 4, reference is made to Example 1.

The terminal determines F (which is greater than or equal to 1) slots that are mapped to one slot n and each include PSFCH resources, and the slots including PSFCH resources each include M (which is greater than or equal to 2) PSFCH resource subsets. In FIG. 4, F (which is greater than or equal to 1) slots that are mapped to the slot n and each include PSFCH resources are slots {X+19, X+15, X+11 }. Each of the three slots includes M (which is equal to 2) PSFCH resource subsets that are the PSFCH resource subset 1 and the PSFCH resource subset 2, respectively.

In the case where M is equal to 2 and m is equal to 1, the first PSFCH resource subset corresponds to the PSFCH resource subset 1 in FIG. 4, and each PSFCH resource in the PSFCH resource subset 1 corresponds to the m-th (m=1) PSFCH reception occasion for one PSSCH. The second PSFCH resource subset corresponds to the PSFCH resource subset M (which is equal to 2) in FIG. 4, and each PSFCH resource in the PSFCH resource subset M (which is equal to 2) corresponds to the last PSFCH reception occasion for one PSSCH.

In the case where M is equal to 2 and m is equal to 1, for the slots X+19 and X+15 among the slots {X+19, X+15, X+11}, the candidate PSSCH transmission occasions determined through the first PSFCH resource subset (the PSFCH resource subset m (which is equal to 1)) of the slot X+19 including PSFCH resources are located in slots {X+14, X+15, X+16, X+17}. The candidate PSSCH transmission occasions determined through the first PSFCH resource subset (the PSFCH resource subset m (which is equal to 1)) of the slot X+15 including PSFCH resources are located in slots {X+10, X+11, X+12, X+13}.

In the case where M is equal to 2 and m is equal to 1, for the slot X+11 among the F (which is greater than or equal to 1) slots {X+19, X+15, X+11} including PSFCH resources, for the slot X+11, the candidate PSSCH transmission occasions are determined based on the first PSFCH resource subset (the PSFCH resource subset m (which is equal to 1)) and the second PSFCH resource subset (the PSFCH resource subset M (which is equal to 2)). The candidate PSSCH transmission occasions determined through the first PSFCH resource subset are located in slots {X+6, X+7, X+8, X+9}, and the candidate PSSCH transmission occasions determined through the second PSFCH resource subset are located in slots {X+2, X+3, X+4, X+5}. Therefore, the candidate PSSCH transmission occasions determined based on the first PSFCH resource subset and the second PSFCH resource subset of the slot X+11 are located in slots {X+2, X+3, X+4, X+5, X+6, X+7, X+8, X+9}.

In summary, for the F (which is greater than or equal to 1) slots {X+19, X+15, X+11} including PSFCH resources, all the candidate PSSCH transmission occasions determined are located in slots {X+2, X+3, X+4, X+5, X+6, X+7, X+8, X+9, X+10, X+11, X+12, X+13, X+14, X+15, X+16, X+17}, respectively.

UE1 reports HARQ-ACK information to the base station, where the HARQ-ACK information includes HARQ-ACK information for the candidate PSSCH transmission occasions. The terminal feeds back 16-bit HARQ-ACK information to the base station, where each bit of HARQ-ACK information corresponds to one candidate PSSCH transmission occasion among the candidate PSSCH transmission occasions located in slots {X+2, X+3, X+4, X+5, X+6, X+7, X+8, X+9, X+10, X+11, X+12, X+13, X+14, X+15, X+16, X+17}. The slot in which UE1 reports the HARQ-ACK information to the base station is the slot n, and the terminal reports the HARQ-ACK information to the base station in the slot n through a PUCCH or a PUSCH.

Optionally, the above candidate PSSCH transmission occasions are numbered according to the following numbering rule: among all the candidate PSSCH transmission occasions determined in the F (which is greater than or equal to 1) slots including PSFCH resources, the number assigned to a j-th candidate PSSCH transmission occasion sorted from late to early in time domain is j. Based on the numbering rule, the numbers of the candidate PSSCH transmission occasions located in slots {X+2, X+3, X+4, X+5, X+6, X+7, X+8, X+9, X+10, X+11, X+12, X+13, X+14, X+15, X+16, X+17} are {15, 14,13, 12, 11, 10, 9, 8, 7, 6, 5, 4, 3, 2, 1, 0}, respectively. As shown in FIG. 7, the zero-th bit of the 16 HARQ bits corresponds to the candidate PSSCH transmission occasion numbered as 0; the first bit of the 16 HARQ bits corresponds to the candidate PSSCH transmission occasion numbered as 1; and so on.

Optionally, the terminal may determine the value of m in the following manner.

The terminal receives control information sent from the base station, the control information includes the number assigned to the PSFCH resource subset, and the terminal determines, based on the received control information, that the value of m is equal to the number assigned to the PSFCH resource subset or is equal to the sum value of the number assigned to the PSFCH resource subset and 1. Alternatively, the terminal receives control information sent from the base station, the control information includes the number of PSFCH reception occasions, and the terminal determines, based on the received control information, that the value of m is equal to the number of PSFCH reception occasions.

Optionally, the control information may include at least one of the following: RRC signaling, SIB information or DCI.

In Example 7, the terminal reports the HARQ-ACK information to the base station in the following method. F (which is greater than or equal to 1) slots that are mapped to one slot n and each include PSFCH resources are determined, where each slot including PSFCH resources includes M (which is greater than or equal to 2) PSFCH resource subsets. For each slot among the slots including PSFCH resources, the candidate PSSCH transmission occasions are determined according to the slot. Part of the candidate PSSCH transmission occasions are deleted from target candidate PSSCH transmission occasions, where the target candidate PSSCH transmission occasions are the collection of all the candidate PSSCH transmission occasions determined for F (which is greater than or equal to 1) slots including PSFCH resources. After the part of the candidate PSSCH transmission occasions are deleted from the target candidate PSSCH transmission occasions, the HARQ-ACK information is reported to the base station for the remaining candidate PSSCH transmission occasions.

Optionally, M (which is greater than or equal to 2) PSFCH resource subsets included in each slot including PSFCH resources includes: for one PSFCH resource subset, each PSFCH resource in the PSFCH resource subset corresponds to the first PSFCH reception occasion for one PSSCH; for one PSFCH resource subset, each PSFCH resource in the PSFCH resource subset corresponds to the second PSFCH reception occasion for one PSSCH; and so on.

The aforementioned process will be described in detail below using FIG. 4 as an example. For the description of FIG. 4, reference is made to Example 1.

The terminal determines F (which is greater than or equal to 1) slots that are mapped to one slot n and each include PSFCH resources, and the slots including PSFCH resources each include M (which is greater than or equal to 2) PSFCH resource subsets. In FIG. 4, F (which is greater than or equal to 1) slots that are mapped to the slot n and each include PSFCH resources are slots {X+19, X+15, X+11 }. Each of the three slots includes M (which is equal to 2) PSFCH resource subsets that are the PSFCH resource subset 1 and the PSFCH resource subset 2, respectively.

For each slot among the slots including PSFCH resources, candidate PSSCH transmission occasions are determined according to the slot. All the PSFCH resource subsets in the slot X+19 include the PSFCH resource subset 1 and the PSFCH resource subset 2. For the slot X+19, the eight candidate PSSCH transmission occasions mapped are located in slots {X+10, X+11, X+12, X+13, X+14, X+15, X+16, X+17}. For the slot X+15, the eight candidate PSSCH transmission occasions mapped are located in slots {X+6, X+7, X+8, X+9, X+10, X+11, X+12, X+13}. For the slot X+ 11, the eight candidate PSSCH transmission occasions mapped are located in slots {X+2, X+3, X+4, X+5, X+6, X+7, X+8, X+9}. A total of 24 candidate PSSCH transmission occasions are determined for all the slots that are mapped to the slot n and include PSFCH resources.

The terminal deletes part of the candidate PSSCH transmission occasions from the 24 candidate PSSCH transmission occasions (the target candidate PSSCH transmission occasions) and reports the HARQ-ACK information to the base station for the remaining candidate PSSCH transmission occasions. The terminal reports the HARQ-ACK information to the base station in the slot n through a PUCCH or a PUSCH.

Optionally, the terminal deletes the part of the candidate PSSCH transmission occasions corresponding to duplicate slot numbers. After the deletion, only 16 candidate PSSCH transmission occasions remain, and the corresponding slot numbers are {X+2, X+3, X+4, X+5, X+6, X+7, X+8, X+9, X+10, X+11, X+12, X+13, X+14, X+15, X+16, X+17}, respectively.

In Example 8, after the part of the candidate PSSCH transmission occasions in Example 7 are deleted, the slot numbers corresponding to the remaining candidate PSSCH transmission occasions are {X+2, X+3, X+4, X+5, X+6, X+7, X+8, X+9, X+10, X+11, X+12, X+13, X+14, X+15, X+16, X+17}, respectively.

The above remaining candidate PSSCH transmission occasions are numbered according to the following numbering rule: among the remaining candidate PSSCH transmission occasions, the number assigned to a j-th candidate PSSCH transmission occasion sorted from late to early in time domain is j.

The zero-th candidate PSSCH transmission occasion among the remaining candidate PSSCH transmission occasions sorted from late to early in time domain is numbered as 0; the first candidate PSSCH transmission occasion among the remaining candidate PSSCH transmission occasions sorted from late to early in time domain is numbered as 1; and so on.

The terminal feeds back the HARQ-ACK information to the base station, and the j-th bit of HARQ-ACK information fed back is the HARQ-ACK information of the j-th candidate PSSCH transmission occasion.

In Example 9, after the part of the candidate PSSCH transmission occasions in Example 7 are deleted, the slot numbers corresponding to the remaining candidate PSSCH transmission occasions are {X+2, X+3, X+4, X+5, X+6, X+7, X+8, X+9, X+10, X+11, X+12, X+13, X+14, X+15, X+16, X+17}, respectively.

The above remaining candidate PSSCH transmission occasions are numbered.

The terminal feeds back N-bit HARQ-ACK information to the base station, and the one bit HARQ-ACK feedback corresponding to the j-th candidate PSSCH transmission occasion is located in the j-th bit of N-bit HARQ-ACK information.

The one bit HARQ-ACK feedback corresponding to the candidate PSSCH transmission occasion numbered as 0 is located in the zero-th bit of N-bit HARQ-ACK information; the one bit HARQ-ACK feedback corresponding to the candidate PSSCH transmission occasion numbered as 1 is located in the first bit of N-bit HARQ-ACK information; and so on.

In Example 10, the operations performed by the first communication node are described below.

A PUCCH slot is determined according to time domain location information of a PUCCH indicated by DCI or an RRC message. One set of PSFCH slots mapped to one PUCCH slot is determined according to the timing relationship between the PSFCH and the PUCCH indicated by the DCI or the RRC message. For each slot in the set of PSFCH slots, the candidate PSSCH transmission occasions corresponding to each PSFCH slot are determined. The HARQ-ACK information is reported to the base station, where the HARQ-ACK information includes the HARQ-ACK information of the candidate PSSCH transmission occasions.

Optionally, the set of PSFCH slots is one of the following: the set of the first PSFCH occasions corresponding to the PSSCH; the set of the last PSFCH occasions corresponding to the PSSCH; or the set of multiple PSFCH occasions corresponding to the PSSCH.

FIG. 8 is another schematic diagram of slot configuration according to an embodiment of the present application. When the above set of PSFCH slots is the set of the first PSFCH occasions corresponding to the PSSCH, the above set of PSFCH slots are the three slots corresponding to the first PSFCH occasions, as shown in FIG. 8. The candidate PSSCH transmission occasions corresponding to these three PSFCH slots corresponds to slots {X+6, X+7, X+8, X+9, X+10, X+11, X+12, X+13, X+14, X+15, X+16, X+17}.

FIG. 9 is yet another schematic diagram of slot configuration according to an embodiment of the present application. When the above set of PSFCH slots is the set of the last PSFCH occasions corresponding to the PSSCH, the above set of PSFCH slots are the three slots corresponding to the last PSFCH occasions (the second PSFCH occasions), as shown in FIG. 9. The candidate PSSCH transmission occasions corresponding to these three PSFCH slots corresponds to slots {X+2, X+3, X+4, X+5, X+6, X+7, X+8, X+9, X+10, X+11, X+12, X+13}.

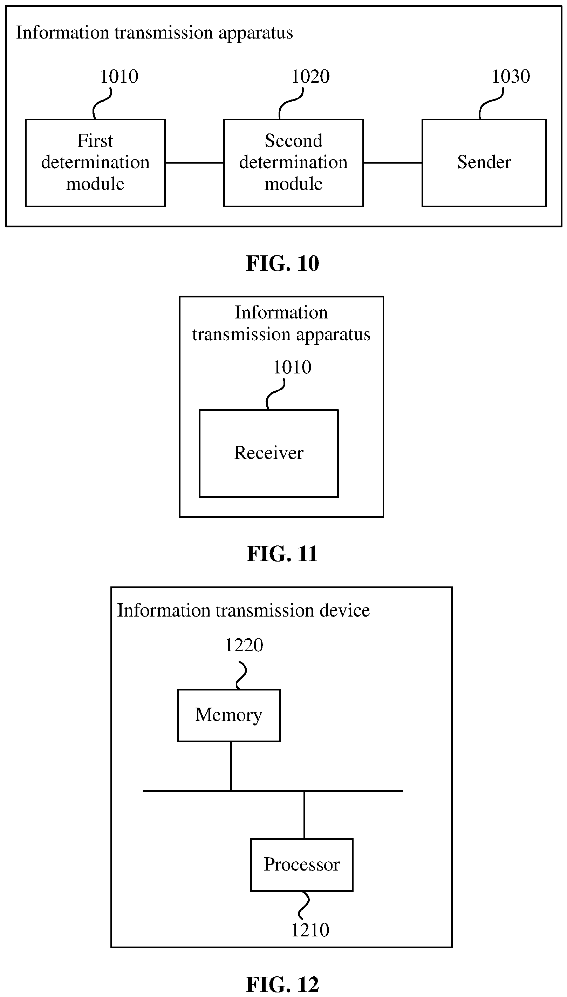

In an embodiment, FIG. 10 is a block diagram of an information transmission apparatus according to an embodiment of the present application. The present embodiment is applied to a first communication node. As shown in FIG. 10, the information transmission apparatus provided in the present embodiment includes a first determination module 1010, a second determination module 1020 and a sender 1030.

The first determination module 1010 is configured to determine at least one second feedback slot mapped to a first feedback slot, where each of the at least one second feedback slot includes at least two feedback resource subsets.

The second determination module 1020 is configured to determine a candidate PSSCH transmission occasion corresponding to at least one feedback resource subset in each of the at least one second feedback slot.

The sender 1030 is configured to send feedback information corresponding to the candidate PSSCH transmission occasion to a second communication node in the first feedback slot.

In an embodiment, at least two feedback resource subsets included in each of the at least one second feedback slot include: each feedback resource subset corresponds to one PSFCH reception occasion corresponding to a candidate PSSCH transmission occasion corresponding to each feedback resource in each feedback resource subset.

In an embodiment, the second determination module 1020 is configured to determine a candidate PSSCH transmission occasion corresponding to one feedback resource subset in each of the at least one second feedback slot, where each feedback resource in one feedback resource subset corresponds to the first PSFCH reception occasion corresponding to the candidate PSSCH transmission occasion.

In an embodiment, the second determination module 1020 is configured to determine a candidate PSSCH transmission occasion corresponding to one feedback resource subset in each of the at least one second feedback slot, where each feedback resource in one feedback resource subset corresponds to the last PSFCH reception occasion corresponding to the candidate PSSCH transmission occasion.

In an embodiment, the second determination module 1020 is configured to determine a candidate PSSCH transmission occasion corresponding to an m-th feedback resource subset in each of the at least one second feedback slot, where m is greater than or equal to 1 and less than or equal to M, and each of the at least one second feedback slot includes M feedback resource subsets.

In an embodiment, the second determination module 1020 is configured to determine a candidate PSSCH transmission occasion corresponding to a first feedback resource subset in at least one second feedback slot and determine a candidate PSSCH transmission occasion corresponding to the first feedback resource subset and a second feedback resource subset in the at least one second feedback slot; where each feedback resource in the first feedback resource subset corresponds to the first PSFCH reception occasion corresponding to the candidate PSSCH transmission occasion, and each feedback resource in the second feedback resource subset corresponds to the last PSFCH reception occasion corresponding to the candidate PSSCH transmission occasion.

In an embodiment, the second determination module 1020 is configured to determine a candidate PSSCH transmission occasion corresponding to a first feedback resource subset in at least one second feedback slot and determine a candidate PSSCH transmission occasion corresponding to the first feedback resource subset and a second feedback resource subset in the at least one second feedback slot; where each feedback resource in the first feedback resource subset corresponds to an m-th PSFCH reception occasion corresponding to the candidate PSSCH transmission occasion, m is greater than or equal to 1 and less than or equal to M, each of the at least one second feedback slot includes M feedback resource subsets, and each feedback resource in the second feedback resource subset corresponds to the last PSFCH reception occasion corresponding to the candidate PSSCH transmission occasion.

In an embodiment, the value of m is determined in the following manner: the value of m is determined according to received control information.

In an embodiment, the control information includes at least one of the following: RRC signaling, SIB information or DCI.

In an embodiment, at least one of the following is carried in the control information: the number allocated to a feedback resource subset or the number of PSFCH reception occasions.

In an embodiment, the value of m is determined according to the received control information includes one of the following: the number assigned to the feedback resource subset is determined to be the value of m; the sum value of the number assigned to the feedback resource subset and 1 is determined to be the value of m; or, the number of the PSFCH reception occasions is determined to be the value of m.

In an embodiment, the number assigned to the candidate PSSCH transmission occasion is determined in the following manner: the number assigned to the candidate PSSCH transmission occasion is determined according to a PSFCH period value, an f-th second feedback slot sorted in reverse order in time domain and an nf-th candidate PSSCH transmission occasion mapped to the f-th second feedback slot.

In an embodiment, the number assigned to a j-th candidate PSSCH transmission occasion among all candidate PSSCH transmission occasions sorted in reverse order in time domain is j.

In an embodiment, the number assigned to a bit of the feedback information is equivalent to the number assigned to the candidate PSSCH transmission occasion.

In an embodiment, in sequential order sorted in time domain, for the first second feedback slot, the candidate PSSCH transmission occasion is a candidate PSSCH transmission occasion corresponding to the first feedback resource subset and the second feedback resource subset; and in sequential order sorted in time domain, for another second feedback slot other than the first second feedback slot, the candidate PSSCH transmission occasion is a candidate PSSCH transmission occasion corresponding to the first feedback resource subset.

In an embodiment, the first determination module 1010 includes a first determination unit and a second determination unit. The first determination unit is configured to determine the first feedback slot according to time domain location information of a PUCCH indicated by DCI or an RRC message. The second determination unit is configured to determine at least one second feedback slot mapped to the first feedback slot according to the timing relationship between a PSFCH and a PUCCH indicated by the DCI or the RRC message. The first feedback slot is one PUCCH slot, the at least one second feedback slot is a slot including PSFCH resources, and each of the at least two feedback resource subsets is a PSFCH resource subset.

The information transmission apparatus provided in the present embodiment is configured to perform the information transmission method in the embodiment shown in FIG. 2. The information transmission apparatus provided in the present embodiment and the method have similar implementation principles and technical effects. The implementation principles and technical effects of the information transmission apparatus are not repeated here.

In an embodiment, FIG. 11 is another block diagram of an information transmission apparatus according to an embodiment of the present application. The present embodiment is applied to a second communication node. As shown in FIG. 11, The information transmission apparatus provided in the present embodiment includes a receiver 1110.

The receiver 1110 is configured to receive feedback information corresponding to a candidate PSSCH transmission occasion from a first communication node in a first feedback slot.

The information transmission apparatus provided in the present embodiment is configured to perform the information transmission method in the embodiment shown in FIG. 3. The information transmission apparatus provided in the present embodiment and the method have similar implementation principles and technical effects. The implementation principles and technical effects of the information transmission apparatus are not repeated here.

FIG. 12 is a structure diagram of an information transmission device according to an embodiment of the present application. As shown in FIG. 12, the device provided by the present application includes a processor 1210 and a memory 1220. One or more processors 1210 may be provided in the device, and one processor 1210 is shown as an example in FIG. 12. One or more memories 1220 may be provided in the device, and one memory 1220 is shown as an example in FIG. 12. The processor 1210 and the memory 1220 of the device may be connected via a bus or in other manners, and the connection via a bus is shown as an example in FIG. 12. In the present embodiment, the device may be a terminal side device (for example, a UE).

As a computer-readable storage medium, the memory 1220 may be configured to store software programs, and computer-executable programs and modules, such as program instructions/modules (for example, the first determination module 1010, the second determination module 1020 and the sender 1030 in the information transmission apparatus) corresponding to the device in any of the embodiment of the present application. The memory 1220 may include a program storage region and a data storage region. The program storage region may store an operating system and an application program required by at least one function. The data storage region may store data created according to the use of the device. In addition, the memory 1220 may include a high-speed random-access memory and may further include a non-volatile memory, such as at least one disk memory, a flash memory, or another non-volatile solid-state memory. In some examples, the memory 1220 may further include memories remotely disposed relative to the processor 1210, and these remote memories may be connected to the device via a network. Examples of the preceding network include, but are not limited to, the Internet, an intranet, a local area network, a mobile communication network, and a combination thereof.

In the case where the information transmission device is the first communication node, the information transmission device provided above may be configured to perform the information transmission method applied to the first communication node described in any of the embodiments and has corresponding functions and effects.

In the case where the information transmission device is the second communication node, the information transmission device provided above may be configured to perform the information transmission method applied to the second communication node described in any of the embodiments and has corresponding functions and effects.

The embodiments of the present application further provide a storage medium including computer-executable instructions which, when executed by a computer processor, are used for enabling the computer processor to perform an information transmission method applied to the first communication node. The method includes: at least one second feedback slot mapped to a first feedback slot is determined, where each of the at least one second feedback slot includes at least two feedback resource subsets; a candidate PSSCH transmission occasion corresponding to at least one feedback resource subset in each of the at least one second feedback slot is determined; and feedback information corresponding to the candidate PSSCH transmission occasion sent to a second communication node in the first feedback slot.

The embodiments of the present application further provide a storage medium including computer-executable instructions which, when executed by a computer processor, are used for enabling the computer processor to perform an information transmission method applied to the second communication node. The method includes: feedback information corresponding to a candidate PSSCH transmission occasion is received from a first communication node in a first feedback slot.

It is to be understood by those skilled in the art that the term "user equipment" encompasses any suitable type of wireless user device, for example, a mobile phone, a portable data processing apparatus, a portable web browser, or a vehicle-mounted mobile station.

Generally speaking, the embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding are only preferred embodiments of the present application and are not intended to limit the present application. For those skilled in the art, the present application may have various modifications and variations. Any modifications, equivalent substitutions, improvements and the like made within the spirit and principle of the present application shall fall within the scope of the present application.

## Claims

1. An information transmission method, applied to a first communication node, comprising:
determining at least one second feedback slot mapped to a first feedback slot, wherein each of the at least one second feedback slot comprises at least two feedback resource subsets;
determining a candidate physical sidelink shared channel, PSSCH, transmission occasion corresponding to at least one feedback resource subset in each of the at least one second feedback slot; and
sending, in the first feedback slot, feedback information corresponding to the candidate PSSCH transmission occasion to a second communication node.

2. The information transmission method according to claim 1, wherein the at least two feedback resource subsets comprised in each of the at least one second feedback slot comprises:
each of the at least two feedback resource subsets corresponds to one physical sidelink feedback channel, PSFCH, reception occasion corresponding to a candidate PSSCH transmission occasion corresponding to each feedback resource in each of the at least two feedback resource subsets.

3. The information transmission method according to claim 1, wherein determining the candidate PSSCH transmission occasion corresponding to the at least one feedback resource subset in each of the at least one second feedback slot comprises:
determining a candidate PSSCH transmission occasion corresponding to one feedback resource subset in each of the at least one second feedback slot;
wherein each feedback resource in the one feedback resource subset corresponds to a first PSFCH reception occasion corresponding to the candidate PSSCH transmission occasion.

4. The information transmission method according to claim 1, wherein determining the candidate PSSCH transmission occasion corresponding to the at least one feedback resource subset in each of the at least one second feedback slot comprises:
determining a candidate PSSCH transmission occasion corresponding to one feedback resource subset in each of the at least one second feedback slot;
wherein each feedback resource in the one feedback resource subset corresponds to a last PSFCH reception occasion corresponding to the candidate PSSCH transmission occasion.

5. The information transmission method according to claim 1, wherein determining the candidate PSSCH transmission occasion corresponding to the at least one feedback resource subset in each of the at least one second feedback slot comprises:
determining a candidate PSSCH transmission occasion corresponding to an m-th feedback resource subset in each of the at least one second feedback slot, wherein m is greater than or equal to 1 and less than or equal to M, and each of the at least one second feedback slot comprises M feedback resource subsets.

6. The information transmission method according to claim 1, wherein determining the candidate PSSCH transmission occasion corresponding to the at least one feedback resource subset in each of the at least one second feedback slot comprises:
determining a candidate PSSCH transmission occasion corresponding to a first feedback resource subset in the at least one second feedback slot; and
determining a candidate PSSCH transmission occasion corresponding to the first feedback resource subset and a second feedback resource subset in the at least one second feedback slot;
wherein each feedback resource in the first feedback resource subset corresponds to a first PSFCH reception occasion corresponding to the candidate PSSCH transmission occasion; and
each feedback resource in the second feedback resource subset corresponds to a last PSFCH reception occasion corresponding to the candidate PSSCH transmission occasion.

7. The information transmission method according to claim 1, wherein determining the candidate PSSCH transmission occasion corresponding to the at least one feedback resource subset in each of the at least one second feedback slot comprises:
determining a candidate PSSCH transmission occasion corresponding to a first feedback resource subset in the at least one second feedback slot; and
determining a candidate PSSCH transmission occasion corresponding to the first feedback resource subset and a second feedback resource subset in the at least one second feedback slot;
each feedback resource in the first feedback resource subset corresponds to an m-th PSFCH reception occasion corresponding to the candidate PSSCH transmission occasion, wherein m is greater than or equal to 1 and less than or equal to M, and each of the at least one second feedback slot comprises M feedback resource subsets; and
each feedback resource in the second feedback resource subset is a last PSFCH reception occasion corresponding to the candidate PSSCH transmission occasion.

8. The information transmission method according to claim 5 or 7, wherein a value of m is determined in the following manner: determining the value of m according to received control information.

9. The information transmission method according to claim 8, wherein the control information comprises at least one of the following: radio resource control, RRC, signaling, system information block, SIB, information or downlink control information, DCI.

10. The information transmission method according to claim 8, wherein at least one of the following is carried in the control information: a number assigned to a feedback resource subset or a number of PSFCH reception occasions.

11. The information transmission method according to claim 10, wherein determining the value of m according to received control information comprises one of the following:
determining the number assigned to the feedback resource subset to be the value of m;
determining a sum value of the number assigned to the feedback resource subset and 1 to be the value of m; or,
determining the number of PSFCH reception occasions to be the value of m.

12. The information transmission method according to claim 1, wherein a number assigned to the candidate PSSCH transmission occasion is determined in the following manner:
determining the number assigned to the candidate PSSCH transmission occasion according to a PSFCH period value, an f-th second feedback slot sorted in reverse order in time domain and an nf-th candidate PSSCH transmission occasion mapped to the f-th second feedback slot.

13. The information transmission method according to claim 1, wherein a number assigned to a j-th candidate PSSCH transmission occasion among all candidate PSSCH transmission occasions sorted in reverse order in time domain is j.

14. The information transmission method according to claim 1, wherein a number assigned to a bit of the feedback information is equivalent to the number assigned to the candidate PSSCH transmission occasion.

15. The information transmission method according to claim 6 or 7, wherein in sequential order sorted in time domain, for a first second feedback slot, the candidate PSSCH transmission occasion is a candidate PSSCH transmission occasion corresponding to the first feedback resource subset and the second feedback resource subset; and
in sequential order sorted in time domain, for another second feedback slot other than the first second feedback slot, the candidate PSSCH transmission occasion is a candidate PSSCH transmission occasion corresponding to the first feedback resource subset.

16. The information transmission method according to claim 1, wherein determining the at least one second feedback slot mapped to the first feedback slot comprises:
determining the first feedback slot according to time domain location information of a physical uplink control channel, PUCCH, indicated by DCI or an RRC message; and
determining the at least one second feedback slot mapped to the first feedback slot according to a timing relationship between a PSFCH and a PUCCH indicated by the DCI or the RRC message;
wherein the first feedback slot is one PUCCH slot, the at least one second feedback slot is a slot comprising a PSFCH resource, and each of the at least two feedback resource subsets is a PSFCH resource subset.

17. An information transmission method, applied to a second communication node, comprising:
receiving, from a first communication node in a first feedback slot, feedback information corresponding to a candidate physical sidelink shared channel, PSSCH, transmission occasion.

18. An information transmission device, comprising a memory and at least one processor;
wherein the memory is configured to store at least one program; and
the at least one program, when executed by the at least one processor, enables the at least one processor to implement the information transmission method according to any one of claims 1 to 16 or the information transmission method according to claim 17.

19. A storage medium storing a computer program which, when executed by a processor, implements the information transmission method according to any one of claims 1 to 16 or the information transmission method according to claim 17.
